# EUROPEAN PATENT APPLICATION

(11) **EP 4 757 420 A1**
(43) Date of publication of application: **10.06.2026**
(21) Application number: 24864034.4
(22) Date of filing: 28.03.2024
(51) Int. Cl.: H04W 36/38

(54) **CELL HANDOVER METHOD AND DEVICE, AND COMPUTER-READABLE STORAGE MEDIUM**

(30) Priority: 12.09.2023 CN 202311178135
(71) Applicant: ZTE CORPORATION, Shenzhen, Guangdong 518057 (CN)
(72) Inventor: CHEN, Xiao, Shenzhen, Guangdong 518057 (CN); LI, Yunhua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/084332
(87) International publication number: WO 2025/055307

(57) **Abstract**

Provided in the present application are a cell handover method and device, and a computer-readable storage medium. The cell handover method comprises: after it is determined that an on-board terminal is required to hand over to or is handing over to a radio access network (RAN) cell, determining whether it is necessary to transmit a V2X service message to the on-board terminal; when it is determined that it is not necessary to transmit a V2X service message to the on-board terminal, controlling the on-board terminal to hand over to the RAN cell; and when it is determined that it is necessary to transmit a V2X service message to the on-board terminal, pausing the handover of the on-board terminal to the RAN cell, and transmitting the V2X service message to the on-board terminal.

## Description

### CROSS REFERENCE TO RELATED APPLICATIONS

This application claims priority to Chinese Patent Application No. 202311178135.2 filed on September 12, 2023, entitled "Cell handover method and device, and computer-readable storage medium", the entirety of which is incorporated herein by reference.

### TECHNICAL FIELD

The present application relates to the field of vehicle networking technology, and more specifically to a cell handover method and device, and computer-readable storage medium.

### BACKGROUD

In related technologies, the development plan for the Internet of Vehicles (IoV) based on C-V2X (Cellular-Vehicle to X / Vehicle to everything) technology has been established in China. In recent years, numerous IoV application demonstrations based on cellular networks have been carried out across the country. In these demonstration areas, various IoV applications based on vehicle-road collaboration have also been extensively validated. In some instances, the vehicle-road collaboration applications in these areas have primarily been validated using PC5-based communication methods, which require extensive deployment of Road State Units (RSUs) for coverage. This makes PC5-based communication methods more suitable for deployment in demonstration areas and hotspot areas, rather than being widely promoted across urban roads nationwide, as establishing a new PC5 V2X network requires significant investment. Additionally, in some instances, there are issues such as low penetration rates of PC5 On board Units (OBUs), poor operability, and low input-output economy, and no viable business model has yet emerged.

Considering the widespread availability of cellular network infrastructure and terminals in China, utilizing the Uu interface for communication and fully leveraging the computing resources of operators' existing base stations and Mobile Edge Computing (MEC) capabilities present a viable complementary approach for building the Internet of Vehicles (IoV). This strategy serves as a crucial pathway to rapidly expand the coverage of IoV applications and enhance the value of data generated on the roadside of IoV.

However, in vehicle-road cooperative communication based on the Uu interface, since vehicles frequently traverse Radio Access Network (RAN) cells of a cellular network, RAN cell handover is required to ensure wireless communication connection. If an RAN cell handover occurs while the application layer, such as a V2X server, is transmitting a V2X message to a vehicle, the transmission of the V2X message is interrupted and can only resume normally after the handover is completed. Since RAN cell handover typically takes around 50 ms, combined with the inherent transmission delay of the V2X message service layer itself, the sum of the two may exceed 100 ms, and the 10 Hz transmission frequency requirement of the V2X message cannot be guaranteed, thereby affecting the continuity of V2X services.

### SUMMARY

Embodiments of the present application provide a cell handover method and a device, and a computer-readable storage medium, so as to improve the continuity of V2X services.

In a first aspect, there is provided a cell handover method, applied to a network device, the method includes: after it is determined that an on-board terminal is required to hand over to or is handing over to a Radio Access Network called RAN cell, determining whether it is necessary to transmit a V2X service message to the on-board terminal; when it is determined that it is not necessary to transmit a V2X service message to the on-board terminal, controlling the on-board terminal to hand over to the RAN cell.

In a second aspect, there is provided a cell handover method, applied to an on-board terminal, the method includes: after determining that it is necessary to transmit a V2X message via a wireless network, determining whether the on-board terminal is currently in a Radio Access Network called RAN cell handover process; when it is determined that the on-board terminal is in a Radio Access Network called RAN cell handover process, pausing the RAN cell handover, and transmitting the V2X service message via a wireless network; and after transmitting the V2X service message, resuming or continuing the RAN cell handover.

In a third aspect, there is provided a cell handover apparatus, applied to a network device, the apparatus includes: a determination module configured to, after determining that an on-board terminal is required to hand over to or is handing over to a Radio Access Network (RAN) cell, determine whether it is necessary to transmit a V2X service message to the on-board terminal; a control module configured to, when it is determined that it is not necessary to transmit a V2X service message to the on-board terminal, control the on-board terminal to hand over to the RAN cell; and a transmission module configured to, when it is determined that it is necessary to transmit a V2X service message to the on-board terminal, pause the handover of the on-board terminal to the RAN cell, and transmit the V2X service message to the on-board terminal.

In a fourth aspect, there is provided a cell handover apparatus, applied to an on-board terminal, the apparatus includes: a determination module configured to, after determining that it is necessary to transmit a V2X message via a wireless network, determine whether it is currently in a Radio Access Network (RAN) cell handover process; a transmission module configured to, when it is determined that it is in a Radio Access Network (RAN) cell handover process, pause the RAN cell handover, and transmit the V2X service message via a wireless network; and a handover module configured to, after transmitting the V2X service message, resume or continue the RAN cell handover.

In a fifth aspect, there is provided an electronic device, including: a processor; and a memory for storing instructions executable by the processor; wherein the processor is configured to execute the instructions, so as to implement the method of the first aspect or the second aspect.

In a sixth aspect, there is provided a computer-readable storage medium, when instructions in the storage medium are executed by a processor of an electronic device, the electronic device is enabled to perform the method of the first aspect or the second aspect.

### BRIEF DESCRIPTION OF THE DRAWINGS

In order to more clearly illustrate the technical solutions in the embodiments of the present application or in the prior art, the drawings required for use in the description of the embodiments or the prior art will be briefly introduced below, obviously, the drawings described below are only some embodiments described in the present application, and other drawings can be obtained by those skilled in the art based on these drawings without paying creative labor.
FIG. 1 is a schematic flow chart illustrating an intra-station cell handover signaling interaction process provided by an embodiment of the present application.
FIG. 2 is a schematic flow chart illustrating an inter-station cell handover signaling interaction process provided by an embodiment of the present application.
FIG. 3 is a schematic flow chart illustrating a cell handover method provided by an embodiment of the present application.
FIG. 4 is a schematic diagram illustrating intra-station cell handover of RAN cell for an on-board terminal provided by an embodiment of the present application.
FIG. 5 is a schematic diagram illustrating inter-station (between an integrated communication, sensing, and computing base station and a conventional base station) cell handover for the RAN cell of an on-board terminal provided by an embodiment of the present application.
FIG. 6 is a schematic diagram illustrating inter-station (between integrated communication, sensing, and computing base stations) cell handover for the RAN cell of an on-board terminal provided by another embodiment of the present application.
FIG. 7 is a schematic flow chart illustrating a cell handover method according to another embodiment of the present application.
FIG. 8 is a schematic structural diagram illustrating a cell handover apparatus according to an embodiment of the present application.
FIG. 9 is a schematic structural diagram illustrating a cell handover apparatus according to another embodiment of the present application.
FIG. 10 is a schematic structural diagram illustrating an on-board terminal 1000 according to an embodiment of the present application.
FIG. 11 is a schematic structural diagram illustrating a network device 1100 according to an embodiment of the present application.

### DETAILED DESCRIPTION

In order to enable those skilled in the art to better understand the technical solutions in the application, technical solutions in embodiments of the application will be described clearly and thoroughly below with reference to the accompanying drawings in embodiments of the application. Obviously, the embodiments described are part of the embodiments of the application rather than all of the embodiments. All other embodiments obtained by those skilled in the art without creative work based on embodiments in the present application shall fall within the scope of the present application.

It should be understood that technical solutions of embodiments of the present application may be applied to various communication systems, such as Global System of Mobile communication (GSM) system, Code Division Multiple Access (CDMA) system, Wideband Code Division Multiple Access (WCDMA) system, General Packet Radio Service (GPRS), Long Term Evolution (LTE) system, LTE Frequency Division Duplex (FDD) system, LTE Time Division Duplex (TDD), Universal Mobile Telecommunication System (UMTS) or Worldwide Interoperability for Microwave Access (WiMAX) communication system, 5G system, or New Radio (NR) system.

An on-board terminal (User Equipment, UE) is a type of terminal equipment, and is mainly applied to a vehicle, the on-board terminal may communicate with at least one core network via a Radio Access Network (e.g., RAN).

A network device (or network-side device) is a device deployed in a wireless access network device to provide information configuration functions, the network device may be a base station, the base station may be a base transceiver station (BTS) in GSM or CDMA, or a NodeB in WCDMA, or an evolved Node B (eNB or e-NodeB) and a gNB in LTE, as well as a network device in subsequent evolved communication systems, however, the term does not constitute a limitation on the scope of protection of the present application.

It should be noted that when describing a specific embodiment, the magnitude of the sequence number of each process does not imply a sequential order of execution. The execution order of each process should be determined based on its function and inherent logic, and should not constitute any limitation on the implementation process of embodiments of the present application.

It should also be noted that the terms "first", "second", and the like in the description and in the claims of the application are used to distinguish between similar objects rather than describing a specific sequence or an order. It is to be understood that data used in such a way may be interchanged where appropriate, whereby embodiments of the application can be implemented in an order other than those illustrated or described herein. In addition, the expression "and/or" in the description and claims of this application indicates at least one of the objects connected therewith, and the character "/" generally indicates that the objects associated therewith are in an "or" relationship.

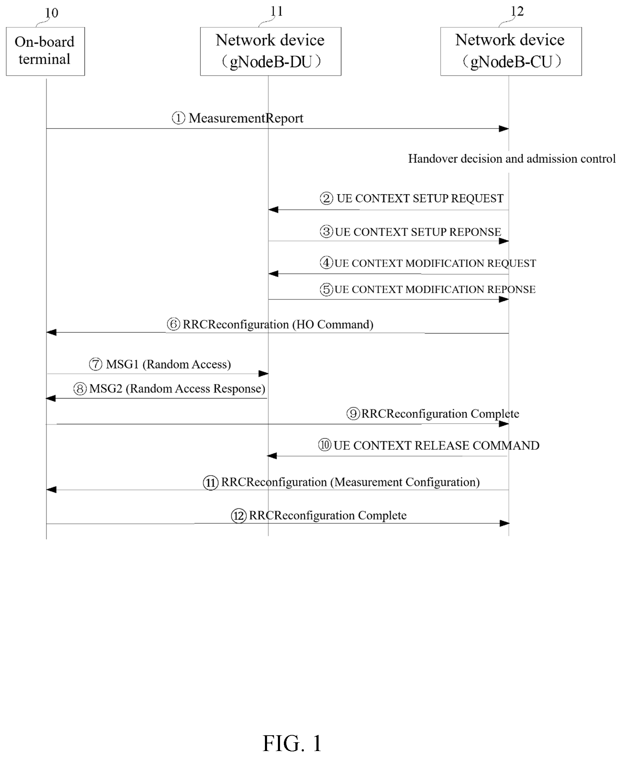

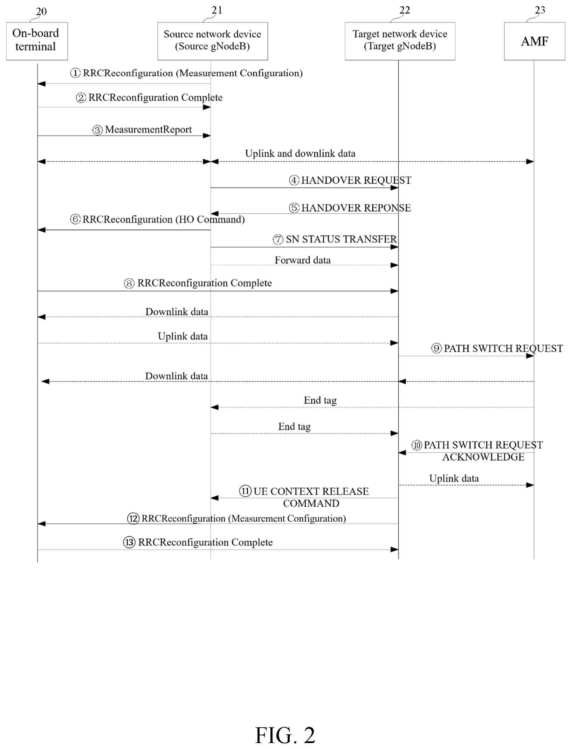

FIG. 1 and FIG. 2 illustrate schematic diagrams of the current intra-station and inter-station cell handover signaling interaction processes, respectively. The following is a brief explanation.

As shown in FIG. 1, for intra-station cell handover, the process may include the following steps.
① The on-board terminal 10 reports a MeasurementReport to the gNodeB Centralized Unit (gNodeB-CU) 12 of the network device, and the gNodeB-CU 12 performs handover decision and admission control.
② The gNodeB-CU 12 sends a UE CONTEXT SETUP REQUEST to the gNodeB Distributed Unit (gNodeB-DU) 11 of the network device.
③ The gNodeB-DU 11 returns a UE CONTEXT SETUP REPONSE to the gNodeB-CU 12.
④ The gNodeB-CU 12 sends a UE CONTEXT MODIFICATION REQUEST to the gNodeB-DU 11 of the network device.
⑤ The gNodeB-DU 11 returns a UE CONTEXT MODIFICATION REPONSE to the gNodeB-CU 12.
⑥ The gNodeB-CU 12 sends an RRCReconfiguration command - a handover command (HO Command) - to the on-board terminal 10.
⑦ The on-board terminal 10 sends MSG1 (Random Access) to the gNodeB-DU 11.
⑧ The gNodeB-DU 11 sends MSG2 (Random Access Response) to the on-board terminal 10.
⑨ The on-board terminal 10 returns RRCReconfiguration Complete to the gNodeB-CU 12.
⑩ The gNodeB-CU 12 sends UE CONTEXT RELEASE COMMAND to gNodeB-DU 11.
⑪ The gNodeB-CU 12 sends RRCReconfiguration - Measurement Configuration (MC) - to the on-board terminal 10.
⑫ The on-board terminal 10 returns RRCReconfiguration Complete to the gNodeB-CU 12.

As shown in FIG. 2, for inter-station cell handover, the process may include the following steps.
① The source network device (source gNodeB) 21 sends RRCReconfiguration-Measurement Configuration (MC) - to the on-board terminal 20.
② The on-board terminal 20 returns RRCReconfiguration Complete to the source network device 21.
③ The on-board terminal 20 reports MeasurementReport to the source network device 21.
④ The source network device 21 sends HANDOVER REQUEST to the target network device (target gNodeB) 22.
⑤ The target network device 22 returns HANDOVER REPONSE to the source network device 21.
⑥ The source network device 21 sends an RRCReconfiguration command - a handover command (HO Command) - to the on-board terminal 20.
⑦ The source network device 21 performs a Serial Number Status Transfer (SN STATUS TRANSFER) to the target network device 22.
⑧ The on-board terminal 20 returns RRCReconfiguration Complete to the target network device 22.
⑨ The target network device 22 sends PATH SWITCH REQUEST to the Access and Mobility Management Function (AMF) 23.
⑩ The AMF 23 returns PATH SWITCH REQUEST ACKNOWLEDGE to the target network device 22.
⑪ The target network device 22 sends UE CONTEXT RELEASE COMMAND to the source network device 21.
⑫ The target network device 22 sends RRCReconfiguration - measurement configuration (MC) - to the on-board terminal 20.
⑬ The on-board terminal 20 returns RRCReconfiguration Complete to the target network device 22.

Generally, the handover process shown in FIGs. 1 and 2 takes about 50 ms. If a V2X (Vehicle to Everything) server at an application layer attempts to send data to an on-board terminal during the cell handover process, the data will be blocked by the network device until the RAN cell handover is completed before being transmitted, as a result, the end-to-end communication delay at the application layer is suddenly extended (since the application layer is unaware of the cell handover process), and in some cases, the transmission may even fail, which affects the continuity of V2X services.

In order to improve the continuity of V2X services and ensure the transmission delay of V2X service messages, there is proposed a cell handover method in the present application, which is introduced in detail below.

Firstly, a cell handover method applied to a network device is illustrated.

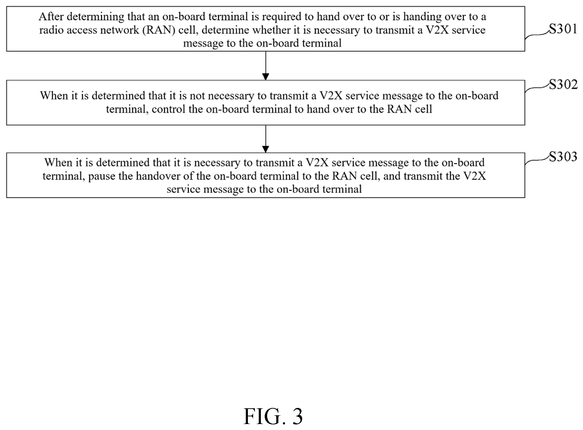

FIG. 3 illustrates a cell handover method provided by an embodiment of the present application, which is applied to a network device. As shown in FIG. 3, the method may include the following steps.

Step 301: after it is determined that an on-board terminal is required to hand over to or is handing over to a Radio Access Network called RAN cell, it is determined whether it is necessary to transmit a V2X service message to the on-board terminal.

Generally, as shown in FIGs. 1 and 2, the process of whether the on-board terminal needs to perform RAN cell handover is controlled by the network device via signaling, that is, the network device notifies the on-board terminal when and how to perform RAN cell handover. Therefore, the network device is aware of whether a certain on-board terminal needs to (is about to) perform or is performing RAN cell handover.

There are many ways to determine whether it is necessary to transmit a V2X service message to the on-board terminal, two examples are given below.

In the first example, the network device determines whether a V2X service message that needs to be forwarded to the on-board terminal is received, if received, it is determined that the V2X service message needs to be transmitted to the on-board terminal, otherwise, it is determined that the V2X service message does not need to be transmitted to the on-board terminal.

Specifically, the network device determines whether a V2X service message that needs to be sent to the on-board terminal has been received from an integrated communication, sensing, and computing unit, if received, it is determined that the V2X service message needs to be transmitted to the on-board terminal, otherwise, it is determined that the V2X service message does not need to be transmitted to the on-board terminal. Alternatively, the network device determines whether a V2X service message that needs to be sent to the on-board terminal has been received from a V2X server, if received, it is determined that the V2X service message needs to be transmitted to the on-board terminal, otherwise, it is determined that the V2X service message does not need to be transmitted to the on-board terminal.

In the second example, the network device determines whether a V2X service message of a current V2X service message cycle of the on-board terminal has been transmitted, and determines whether a next V2X service message cycle of the on-board terminal has started, upon determining that a V2X service message in a current V2X service message cycle for the on-board terminal has been transmitted and that a next V2X service message cycle has not started, it is determined that it is not necessary to transmit a V2X service message to the on-board terminal; otherwise, it is determined that it is necessary to transmit a V2X service message to the on-board terminal.

Step 302: when it is determined that it is not necessary to transmit a V2X service message to the on-board terminal, the on-board terminal is controlled to hand over to the RAN cell.

Step 303: when it is determined that it is necessary to transmit a V2X service message to the on-board terminal, the handover of the on-board terminal to the RAN cell is paused, and the V2X service message is transmitted to the on-board terminal.

In an embodiment of the present application, after it is determined that an on-board terminal is required to hand over to or is handing over to a Radio Access Network (RAN) cell, it may be determined whether it is necessary to transmit a V2X service message to the on-board terminal; when it is determined that it is not necessary to transmit a V2X service message to the on-board terminal, the on-board terminal is controlled to hand over to the RAN cell, and when it is determined that it is necessary to transmit a V2X service message to the on-board terminal, the handover of the on-board terminal to the RAN cell is paused, and the V2X service message is transmitted to the on-board terminal. This ensures that RAN cell handover does not affect the transmission of V2X service messages, which can enhance the continuity of V2X services and guarantee the transmission delay of V2X service messages.

Based on the first example above, step 302 may include: after the V2X service message is transmitted to the on-board terminal, the on-board terminal is controlled to resume or continue handing over to the RAN cell.

The V2X service message is transmitted to the on-board terminal includes: the V2X service message is transmitted to the on-board terminal via a current wireless channel. That is, the V2X service message is transmitted to the on-board terminal via a wireless channel before the handover.

That is, in the first example above, since the process of whether the on-board terminal needs to perform RAN cell handover is controlled by the network device via signaling, that is, the network device notifies the on-board terminal when and how to perform RAN cell handover. Therefore, when a network-side device receives a V2X service message from the integrated communication, sensing, and computing unit or the V2X server and needs to send the V2X service message to a certain on-board terminal, it can firstly check whether the on-board terminal is required to hand over to or is handing over to a RAN cell. If so, the RAN cell handover process is suspended at first (for example, the transmission of RRC Reconfiguration signaling is temporarily suspended), and the V2X service message is sent on the current wireless channel (original wireless channel); after the V2X service message is sent, the on-board terminal is controlled to resume or continue the RAN cell handover process.

Based on the above second example, controlling the on-board terminal to hand over to the RAN cell in step 102 may include: the on-board terminal is controlled to hand over to the RAN cell within a transmission time interval between two consecutive V2X service messages.

That is, in the second example above, considering that the transmission of V2X service messages has a fixed period, generally every 100 ms for messages such as the Remote Server Interface (RSI) message. Therefore, the network device can schedule, according to the characteristic that a V2X service message has a fixed period, the on-board terminal that needs to perform RAN cell handover to perform RAN cell handover during the time gap between two consecutive V2X service messages (that is, after the current V2X service message is sent and before the next transmission cycle of V2X service messages begins) based on the fixed period of the V2X service message. Since the RAN cell handover time is usually less than the V2X service message period, it will not affect the transmission delay of V2X messages, which ensures the continuity of V2X services.

It should be noted that the integrated communication, sensing, and computing unit is a functional module of a network device (such as a base station). The network device implements the integrated communication, sensing, and computing function by adding computing boards, and establishes a connection with a V2X cloud control platform, the integrated communication, sensing, and computing unit is responsible for roadside perception fusion calculation, packages the perception results into a V2X message adapted to a Uu interface, and then sends the Uu V2X service message directly to the on-board terminal by the network device. Similarly, the on-board terminal also sends the adapted V2X service message to the integrated communication, sensing, and computing unit on the network device side via the Uu port. Such network device (commonly referred to as integrated communication, sensing, and computing base stations, such as 5G integrated communication, sensing, and computing base stations) inherently possess significant advantages in reducing V2X service delay and conserving backhaul network resources for V2X services.

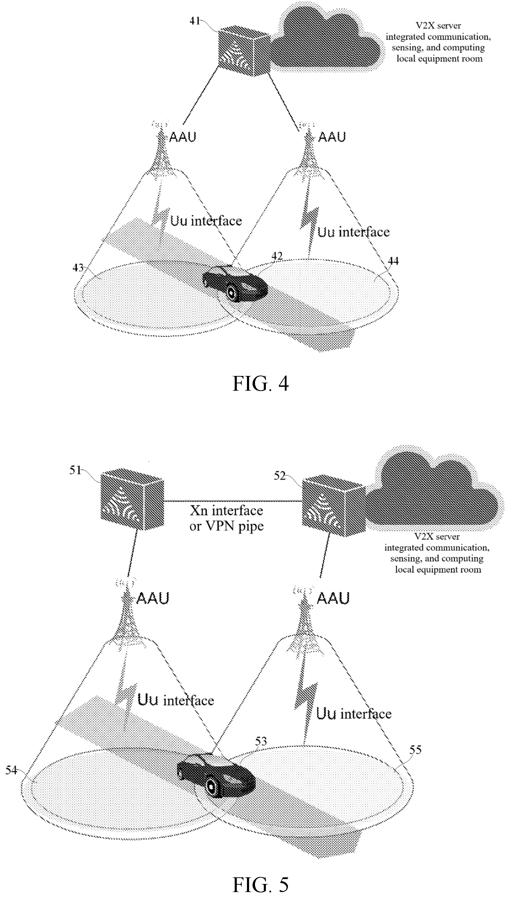

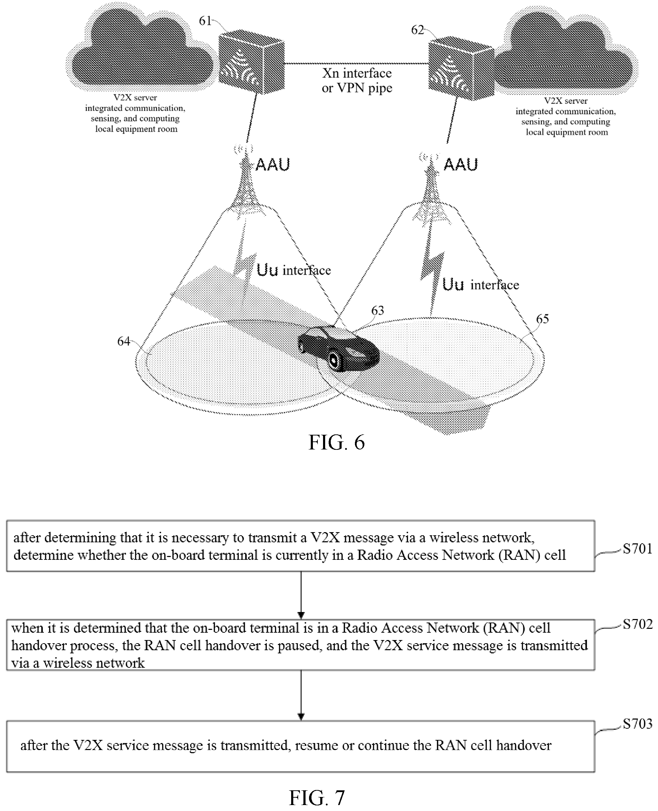

In addition, the RAN cell handover of the on-board terminal often includes two types, intra-station handover (the two RAN cells before and after the handover belong to the same base station) and inter-station handover (the two RAN cells before and after the handover belong to different base stations). The processes of intra-station handover and inter-station handover are briefly illustrated below in FIGs. 4, 5, and 6. FIG. 4 is a schematic diagram illustrating intra-station cell handover of RAN cell for an on-board terminal; FIG. 5 is a schematic diagram illustrating inter-station (between an integrated communication, sensing, and computing base station and a conventional base station) cell handover for the RAN cell of an on-board terminal; FIG. 6 is a schematic diagram illustrating inter-station (between integrated communication, sensing, and computing base stations) cell handover for the RAN cell of an on-board terminal.

As shown in FIG. 4, a 5G integrated communication, sensing, and computing base station (that is, a V2X server integrated communication, sensing, and computing local equipment room) 41 manages RAN cell 43 and RAN cell 44. The 5G integrated communication, sensing, and computing base station 41 communicates with the RAN cell 43 or the RAN cell 44 via a Uu interface provided by the active antenna unit (AAU). If the on-board terminal 42 needs to hand over to the RAN cell 44 from the RAN cell 43, this constitutes an intra-station RAN cell handover, which can be performed according to the signaling process illustrated in FIG. 1.

As shown in FIG. 5, a conventional 5G base station 51 manages RAN cell 54, a 5G integrated communication, sensing, and computing base station (that is, a V2X server integrated communication, sensing, and computing local equipment room) 52 manages RAN cell 55, the conventional 5G base station 51 communicates with the RAN cell 54 via a Uu interface provided by the AAU, and the 5G integrated communication, sensing, and computing base station communicates with the RAN cell 55 via a Uu interface provided by the AAU. If the on-board terminal 53 needs to hand over to the RAN cell 55 from the RAN cell 54, this constitutes an inter-station RAN cell handover, which can be performed according to the signaling process illustrated in FIG. 2.

As shown in FIG. 6, a 5G integrated communication, sensing, and computing base station (that is, a V2X server integrated communication, sensing, and computing local equipment room) 61 manages RAN cell 64, a 5G integrated communication, sensing, and computing base station (that is, a V2X server integrated communication, sensing, and computing local equipment room) 62 manages RAN cell 65. The 5G integrated communication, sensing, and computing base station 61 communicates with the RAN cell 54 via a Uu interface provided by the AAU, the 5G integrated communication, sensing, and computing base station 62 also communicates with the RAN cell 55 via a Uu interface provided by the AAU. If the on-board terminal 63 needs to hand over to the RAN cell 65 from the RAN cell 64, this constitutes an int34-station RAN cell handover, which can be performed according to the signaling process illustrated in FIG. 2.

With the cell handover method provided in embodiments of the present application, after it is determined that an on-board terminal is required hand over to or is handing over to a Radio Access Network (RAN) cell, it may be determined whether it is necessary to transmit a V2X service message to the on-board terminal; when it is determined that it is not necessary to transmit a V2X service message to the on-board terminal, the on-board terminal is controlled to hand over to the RAN cell. Furthermore, when transmitting a V2X service message, the RAN cell handover is paused. This ensures that RAN cell handover does not affect the transmission of V2X service messages, which can enhance the continuity of V2X services and guarantee the transmission delay of V2X service messages.

A cell handover method applied to an on-board terminal is illustrated below.

FIG. 7 illustrates a cell handover method provided by an embodiment of the present application, which is applied to an on-board terminal. As shown in FIG. 7, the method may include the following steps.

Step 701: after determining that it is necessary to transmit a V2X message via a wireless network, it is determined whether the on-board terminal is currently in a Radio Access Network (RAN) cell handover process.

Step 702: when it is determined that the on-board terminal is in a Radio Access Network (RAN) cell handover process, the RAN cell handover is paused, and the V2X service message is transmitted via a wireless network.

Transmitting the V2X service message via a wireless network may include the V2X service message is transmitted via a current wireless channel. That is, the V2X service message is transmitted via an original wireless channel before the handover.

The V2X service message may be transmitted to an integrated communication, sensing, and computing unit by the on-board terminal via a wireless network, or the V2X service message may be transmitted to a V2X server by the on-board terminal via a wireless network.

Pausing the RAN cell handover may include: the response to the RAN cell handover process controlled by the network device is paused, such as the response/execution of RRC reconfiguration signaling is paused.

Step 703: after the V2X service message is transmitted, the RAN cell handover is resumed or continued.

This embodiment is intended to illustrate that when an on-board terminal is preparing to transmit a V2X message via a Uu interface, it firstly checks whether the on-board terminal is in the RAN cell handover process, if so, the RAN cell handover process is paused (for example, the response/execution of handover signaling is paused), then the V2X message is transmitted over an original wireless channel; after the V2X message is transmitted, the RAN cell handover process is resumed or continued.

The embodiment shown in FIG. 7 provides a cell handover method, which can, after determining that it is necessary to transmit a V2X message via a wireless network, determine whether the on-board terminal is currently in a Radio Access Network called RAN cell handover process; when it is determined that the on-board terminal is in a Radio Access Network called RAN cell handover process, the RAN cell handover is paused, and the V2X service message is transmitted via a wireless network; and after the V2X service message is transmitted, the RAN cell handover process is resumed or continued. This ensures that RAN cell handover does not affect the transmission of V2X service messages, which can enhance the continuity of V2X services and guarantee the transmission delay of V2X service messages.

A cell handover method provided in embodiments of the present application is introduced above, and a cell handover device provided in embodiments of the present application is illustrated below.

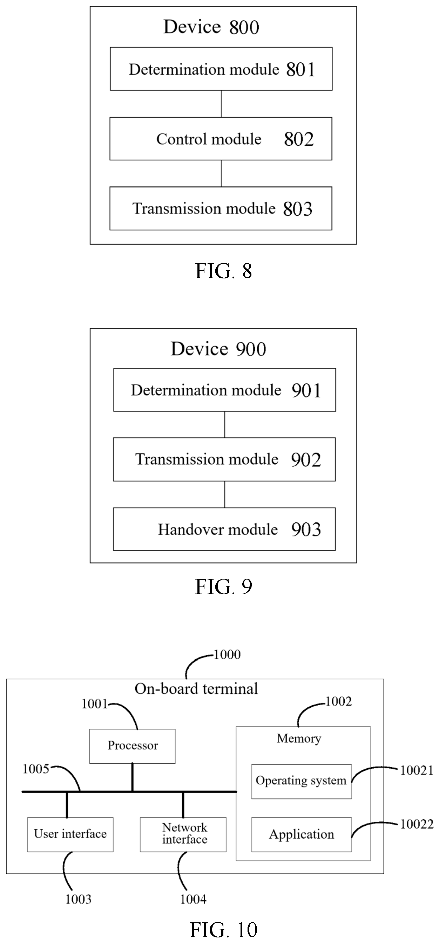

FIG. 8 illustrates a schematic structural diagram of a cell handover device provided by an embodiment of the present application, the device may be applied to a network device. As shown in FIG. 8, the device includes a determination module 801, a control module 802 and a transmission module 803.

The determination module 801 is used to, after determining that an on-board terminal is required to hand over to or is handing over to a Radio Access Network (RAN) cell, determine whether it is necessary to transmit a V2X service message to the on-board terminal.

Generally, as shown in FIGs. 1 and 2, the process of whether the on-board terminal needs to perform RAN cell handover is controlled by the network device via signaling, that is, the network device notifies the on-board terminal when and how to perform RAN cell handover. Therefore, the network device is aware of whether a certain on-board terminal needs to (is about to) perform or is performing RAN cell handover.

There are many ways to determine whether it is necessary to transmit a V2X service message to the on-board terminal, two examples are given below.

In the first example, the network device determines whether a V2X service message that needs to be forwarded to the on-board terminal is received, if received, it is determined that the V2X service message needs to be transmitted to the on-board terminal, otherwise, it is determined that the V2X service message does not need to be transmitted to the on-board terminal.

Specifically, the network device determines whether a V2X service message that needs to be sent to the on-board terminal has been received from an integrated communication, sensing, and computing unit, if received, it is determined that the V2X service message needs to be transmitted to the on-board terminal, otherwise, it is determined that the V2X service message does not need to be transmitted to the on-board terminal. Alternatively, the network device determines whether a V2X service message that needs to be sent to the on-board terminal has been received from a V2X server, if received, it is determined that the V2X service message needs to be transmitted to the on-board terminal, otherwise, it is determined that the V2X service message does not need to be transmitted to the on-board terminal.

In the second example, the network device determines whether a V2X service message of a current V2X service message cycle of the on-board terminal has been transmitted, and determines whether a next V2X service message cycle of the on-board terminal has started, upon determining that a V2X service message in a current V2X service message cycle for the on-board terminal has been transmitted and that a next V2X service message cycle has not started, it is determined that it is not necessary to transmit a V2X service message to the on-board terminal; otherwise, it is determined that it is necessary to transmit a V2X service message to the on-board terminal.

The control module 802 is used to, when it is determined that it is not necessary to transmit a V2X service message to the on-board terminal, control the on-board terminal to hand over to the RAN cell.

The transmission module 803 is used to, when it is determined that it is necessary to transmit a V2X service message to the on-board terminal, pause the handover of the on-board terminal to the RAN cell, and transmit the V2X service message to the on-board terminal.

Based on the first example above, the control module 802 may be used to, after transmitting the V2X service message to the on-board terminal, control the on-board terminal to resume or continue handing over to the RAN cell.

Transmitting the V2X service message to the on-board terminal may include: the V2X service message is transmitted to the on-board terminal via a current wireless channel. That is, the V2X service message is transmitted to the on-board terminal via a wireless channel before the handover.

That is, in the first example above, since the process of whether the on-board terminal needs to perform RAN cell handover is controlled by the network device via signaling, that is, the network device notifies the on-board terminal when and how to perform RAN cell handover. Therefore, when a network-side device receives a V2X service message from the integrated communication, sensing, and computing unit or the V2X server and needs to send the V2X service message to a certain on-board terminal, it can firstly check whether the on-board terminal is required to hand over to or is handing over to a RAN cell. If so, the RAN cell handover process is suspended at first (for example, the transmission of RRC Reconfiguration signaling is temporarily suspended), and the V2X service message is sent on the current wireless channel (original wireless channel); after the V2X service message is sent, the on-board terminal is controlled to resume or continue the RAN cell handover process.

Based on the above second example, the control module 802 may be used to control the on-board terminal to hand over to the RAN cell within a transmission time interval between two consecutive V2X service messages.

That is, in the second example above, considering that the transmission of V2X service messages has a fixed period, generally every 100 ms for messages such as the Remote Server Interface (RSI) message. Therefore, the network device can schedule, according to the characteristic that a V2X service message has a fixed period, the on-board terminal that needs to perform RAN cell handover to perform RAN cell handover during the time gap between two consecutive V2X service messages (that is, after the current V2X service message is sent and before the next transmission cycle of V2X service messages begins) based on the fixed period of the V2X service message. Since the RAN cell handover time is usually less than the V2X service message period, it will not affect the transmission delay of V2X messages, which ensures the continuity of V2X services.

It should be noted that the integrated communication, sensing, and computing unit is a functional module of a network device (such as a base station). The network device implements the integrated communication, sensing, and computing function by adding computing boards, and establishes a connection with a V2X cloud control platform, the integrated communication, sensing, and computing unit is responsible for roadside perception fusion calculation, packages the perception results into a V2X message adapted to a Uu interface, and then sends the Uu V2X service message directly to the on-board terminal by the network device. Similarly, the on-board terminal also sends the adapted V2X service message to the integrated communication, sensing, and computing unit on the network device side via the Uu port. Such network device (commonly referred to as integrated communication, sensing, and computing base stations, such as 5G integrated communication, sensing, and computing base stations) inherently possess significant advantages in reducing V2X service delay and conserving backhaul network resources for V2X services.

In addition, the RAN cell handover of the on-board terminal often includes two types of scenarios, intra-station handover (the two RAN cells before and after the handover belong to the same base station) and inter-station handover (the two RAN cells before and after the handover belong to different base stations). For specific details, please refer to the descriptions of FIGs. 4, 5, and 6 above.

With the cell handover device provided in embodiments of the present application, after it is determined that an on-board terminal is required hand over to or is handing over to a Radio Access Network (RAN) cell, it may be determined whether it is necessary to transmit a V2X service message to the on-board terminal; when it is determined that it is not necessary to transmit a V2X service message to the on-board terminal, the on-board terminal is controlled to hand over to the RAN cell. Furthermore, when transmitting a V2X service message, the RAN cell handover is paused. This ensures that RAN cell handover does not affect the transmission of V2X service messages, which can enhance the continuity of V2X services and guarantee the transmission delay of V2X service messages.

The device shown in FIG. 8 above may be used to implement various embodiments of the cell handover method shown in FIG. 3 above, for relevant details, please refer to the above method embodiments.

FIG. 9 illustrates a schematic structural diagram of a cell handover device provided by an embodiment of the present application, the device may be applied to an on-board terminal. As shown in FIG. 9, the device includes a determination module 901, a transmission module 902 and a handover module 903.

The determining module 901 is used to, after determining that it is necessary to transmit a V2X message via a wireless network, determine whether it is currently used to in a Radio Access Network (RAN) cell handover process.

The transmission module 902 is used to, when it is determined that it is used to in a Radio Access Network (RAN) cell handover process, pause the RAN cell handover, and transmit the V2X service message to the network device.

Transmitting the V2X service message via a wireless network may include the V2X service message is transmitted via a current wireless channel. That is, the V2X service message is transmitted to the network device via an original wireless channel before the handover.

The V2X service message may be transmitted to an integrated communication, sensing, and computing unit by the on-board terminal via a wireless network, or the V2X service message may be transmitted to a V2X server by the on-board terminal via a wireless network.

Pausing the RAN cell handover may include: the response to the RAN cell handover process controlled by the network device is paused, such as the response/execution of RRC reconfiguration signaling is paused.

The handover module 903 is used to, after transmitting the V2X service message, resume or continue the RAN cell handover.

This embodiment is intended to illustrate that when an on-board terminal is preparing to transmit a V2X message via a Uu interface, it firstly checks whether the on-board terminal is in the RAN cell handover process, if so, the RAN cell handover process is paused (for example, the response/execution of the RRC reconfiguration signaling is paused), then the V2X message is transmitted over an original wireless channel; after the V2X message is transmitted, the RAN cell handover process is resumed or continued.

The embodiment shown in FIG. 9 provides a cell handover device, which can, after determining that it is necessary to transmit a V2X message via a wireless network, determine whether the on-board terminal is currently in a Radio Access Network (RAN) cell handover process; when it is determined that the on-board terminal is in a Radio Access Network called RAN cell handover process, the RAN cell handover is paused, and the V2X service message is transmitted via a wireless network; and after the V2X service message is transmitted, the RAN cell handover process is resumed or continued. This ensures that RAN cell handover does not affect the transmission of V2X service messages, which can enhance the continuity of V2X services and guarantee the transmission delay of V2X service messages.

The device shown in FIG. 9 above may be used to implement various embodiments of the cell handover method shown in FIG. 7 above, for relevant details, please refer to the above method embodiments.

FIG. 10 is a schematic structural diagram of an on-board terminal according to another embodiment of the present application. The on-board terminal 1000 shown in FIG. 10 includes at least one processor 1001, a memory 1002, at least one network interface 1004 and a user interface 1003. Various components in the on-board terminal 1000 are coupled together via a bus system 1005. It can be understood that the bus system 1005 is used to implement connection and communication among these components. In addition to the data bus, the bus system 1005 further includes a power bus, a control bus and a status signal bus. However, for the sake of clarity, various buses are marked as the bus system 1005 in FIG. 5.

The user interface 1003 may include a display, a keyboard, or a pointing device (e.g., a mouse, a trackball, a touch pad, or a touch screen).

It can be understood that the memory 1002 in embodiments of the present application may include volatile memory or non-volatile memory, or the memory may include both volatile and non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), which is used as an external cache. By way of example but not limitation, many forms of RAM are available, such as a static random access memory (SRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synch link dynamic random access memory (SLDRAM) and a direct rambus random access memory (DRRAM). The memory 1002 of the system and method described in embodiments of the present application is intended to include but is not limited to these and any other suitable types of memory.

In some implementations, the memory 1002 stores the following elements, executable modules or data structures, or a subset thereof, or an extended set thereof: an operating system 10021 and an application 10022.

The operating system 10021 includes various system programs, such as a framework layer, a core library layer, a driver layer, etc., which are used to implement various basic services and process hardware-based tasks. The application 10022 includes various application programs, such as a media player, a browser, etc., which are used to implement various application services. The program for implementing the method of embodiments of the present application may be included in the application 10022.

In an embodiment of the present application, the on-board terminal 1000 further includes a computer program stored on the memory 1002 and is executable on the processor 1001, the computer program, when executed by the processor 1001, implements various processes of the above-mentioned cell handover method, and can achieve the same technical effect, to avoid repetition, it will not be repeated here.

The method disclosed in the above embodiment of the present application may be applied to the processor 1001 or implemented by the processor 1001. The processor 1001 may be an integrated circuit chip with signal processing capability. In the implementation process, each step of the above method may be completed by an integrated logic circuit in the form of hardware in the processor 100 or an instruction in the form of software. The above-mentioned processor 301 may be a general-purpose processor, a digital signal processor (DSP), an application-specific integrated circuit (ASIC), a field-programmable gate array (FPGA) or other programmable logic devices, discrete gates or transistor logic devices, discrete hardware components. The methods, steps and logic block diagrams disclosed in the embodiments of the present application may be implemented or executed. A general-purpose processor may be a microprocessor or the processor may also be any conventional processor, etc. The steps of the method disclosed in the embodiments of the present application may be directly embodied as a hardware decoding processor for execution, or may be implemented by a combination of hardware and software modules in the decoding processor. The software module may be located in a computer-readable storage medium well-known in the art, such as a random access memory, a flash memory, a read-only memory, a programmable read-only memory, or an electrically erasable programmable memory, a register, etc. The computer-readable storage medium is located in the memory 1002, and the processor 1001 reads information in the memory 1002 and completes the steps of the above method in combination with its hardware. Specifically, the computer-readable storage medium stores a computer program thereon, and the computer program, when executed by the processor 1001, implements various steps of the above-mentioned cell handover method embodiments.

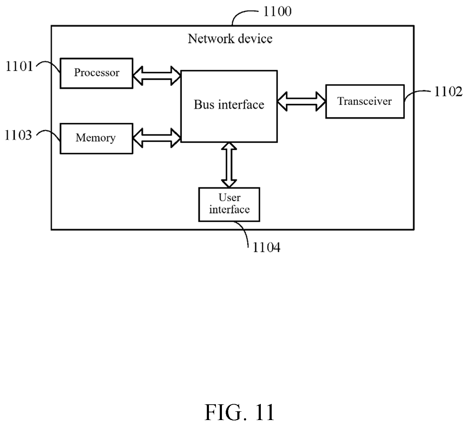

Please refer to FIG. 11, FIG. 11 is a structural diagram of a network device to which embodiments of the present application are applied, which can implement details of the above-mentioned cell handover method and achieve the same effect. As shown in FIG. 11, the network device 1100 includes a processor 1101, a transceiver 1102, a memory 1103, a user interface 1104 and a bus interface.

In an embodiment of the present application, the network device 1100 further includes a computer program stored on the memory on 1103 is executable on the processor 1101, the computer program, when executed by the processor 1101, implements various processes of the above-mentioned cell handover method, and can achieve the same technical effect, to avoid repetition, it will not be repeated here.

In FIG. 11, the bus architecture may include any number of interconnected buses and bridges, specifically, at least one processor represented by processor 1101 and various circuits of memory represented by memory 1103 are connected together. The bus architecture may also connect various other circuits together, such as peripheral devices, voltage regulators, and power management circuits, which are all well known in the art and therefore will not be described further herein. The bus interface provides an interface. The transceiver 1102 may be a plurality of elements, that is, it includes a receiver and a transmitter, which provides units for communicating with various other apparatus over a transmission medium. For different on-board terminals, the user interface 1104 may also be an interface capable of externally and internally connecting required devices, and the connected devices include but are not limited to a keypad, a display, a speaker, a microphone, a joystick, and the like.

The processor 1101 is responsible for managing the bus architecture and general processing, and the memory 1103 may store data used by the processor 1101 when performing operations.

It is understood that the embodiments described in embodiments of the present application may be implemented by hardware, software, firmware, middleware, microcode or a combination thereof. For hardware implementations, the processing unit may be implemented in at least one application specific integrated circuit (ASIC), digital signal processor (DSP), digital signal processing device (DSPD), programmable logic device (PLD), field programmable gate array (FPGA), general processor, controller, microcontroller, microprocessor, other electronic unit, or a combination thereof for performing the functions described in the present application.

For software implementations, the technology described in the embodiments of the present application may be implemented by a module (such as a process, function, etc.) that performs the functions described in the embodiments of the present application. The software code may be stored in a memory and executed by a processor. The memory may be implemented in the processor or outside the processor.

An embodiment of the present application further provides a computer-readable storage medium storing a computer program thereon, and the computer program, when executed by the processor, implements various processes of the above-mentioned cell handover method embodiments, and can achieve the same technical effect, to avoid repetition, it will not be repeated here. The computer-readable storage medium includes read-only memory (ROM), random access memory (RAM), magnetic disk or optical disk.

An embodiment of the present application further provides a computer program product including instructions, when a computer runs the instructions of the computer program product, the computer executes the above-mentioned cell handover method. Specifically, the computer program product may run on the above-mentioned network device.

Those skilled in the art will appreciate that the units and algorithm steps of each example described in conjunction with the embodiments disclosed herein may be implemented in electronic hardware, or a combination of computer software and electronic hardware. Whether these functions are performed in hardware or software depends on the specific application and design constraints of the technical solution. Professional and technical personnel can use different methods to implement the described functions for each specific application, but such implementation should not be considered to be beyond the scope of the present application.

Those skilled in the art can clearly understand that, for the convenience and brevity of description, the specific working process of the systems, devices and units described above can refer to the corresponding process in the above-mentioned method embodiment, which will not be repeated here.

In several embodiments provided in the present application, it should be understood that the disclosed systems, devices and methods may be implemented in other ways. For example, the device embodiments described above are only schematic. For example, the division of the units is only a logical function division, there may be other division methods in actual implementations, for example, a plurality of units or components may be combined or integrated into another system, or some features may be ignored or not executed. On the other hand, the coupling or direct coupling or communication connection between each other shown or discussed may be implemented via some interfaces, the indirect coupling or communication connection of devices or units may be of electrical, mechanical or other forms.

The units described as separate components may be or may not be physically separated, and the components displayed as units may be or may not be physical entities, that is, they may be located in one place or distributed across a plurality of network units. Some or all of the units may be selected according to actual needs to achieve the objectives of this embodiment.

In addition, various functional units in each embodiment of the present application may be integrated into one processing unit, or various units may each exist physically separately, or two or more units may be integrated into one unit.

If the functions are implemented in the form of software functional units and are sold or used as independent products, they may be stored in a computer-readable storage medium. Based on such understanding, the technical solution of the this application essentially or the part contributing to the prior art or a part of the technical solution may be embodied in the form of a software product, the computer software product is stored in a storage medium, and includes a number of instructions for instructing a computer device (which may be a personal computer, a server, or a network device) to execute all or part of the steps of the methods described in each embodiment of the present application. The above-mentioned storage media include USB drive, mobile hard drive, read-only memory (ROM), random access memory (RAM), magnetic disk or optical disk and other media that can store program codes.

The foregoing descriptions are merely specific implementations of the present application, but are not intended to limit the scope of protection of the present application, person skilled in the art can easily think of changes or replacements within the technical scope disclosed in the present application, and these changes or replacements should be included in the scope of protection of the present application. Therefore, the scope of protection of the present application shall be based on the scope of protection of the claims.

## Claims

1. A cell handover method, applied to a network device, comprising:
after it is determined that an on-board terminal is required to hand over to or is handing over to a Radio Access Network RAN cell, determining whether it is necessary to transmit a V2X service message to the on-board terminal;
when it is determined that it is not necessary to transmit a V2X service message to the on-board terminal, controlling the on-board terminal to hand over to the RAN cell; and
when it is determined that it is necessary to transmit a V2X service message to the on-board terminal, pausing the handover of the on-board terminal to the RAN cell, and transmitting the V2X service message to the on-board terminal.

2. The cell handover method according to claim 1, wherein when it is determined that it is not necessary to transmit a V2X service message to the on-board terminal, controlling the on-board terminal to hand over to the RAN cell comprises:
after transmitting the V2X service message to the on-board terminal, controlling the on-board terminal to resume or continue handing over to the RAN cell.

3. The cell handover method according to claim 1 or 2, wherein transmitting the V2X service message to the on-board terminal comprises:
transmitting the V2X service message to the on-board terminal via a current wireless channel.

4. The cell handover method according to claim 1 or 2, wherein determining whether it is necessary to transmit a V2X service message to the on-board terminal comprises:
determining whether a V2X service message that needs to be sent to the on-board terminal has been received from an integrated communication, sensing, and computing unit.

5. The cell handover method according to claim 1 or 2, wherein determining whether it is necessary to transmit a V2X service message to the on-board terminal comprises:
determining whether a V2X service message that needs to be sent to the on-board terminal has been received from a V2X server.

6. The cell handover method according to claim 1, wherein determining whether it is necessary to transmit a V2X service message to the on-board terminal comprises:
determining whether a V2X service message of a current V2X service message cycle of the on-board terminal has been transmitted, and determining whether a next V2X service message cycle of the on-board terminal has started.

7. The cell handover method according to claim 6, wherein determining whether it is necessary to transmit a V2X service message to the on-board terminal further comprises:
upon determining that a V2X service message in a current V2X service message cycle for the on-board terminal has been transmitted and that a next V2X service message cycle has not started, determining that it is not necessary to transmit a V2X service message to the on-board terminal.

8. The cell handover method according to claim 7, wherein controlling the on-board terminal to hand over to the RAN cell comprises:
controlling the on-board terminal to hand over to the RAN cell within a transmission time interval between two consecutive V2X service messages.

9. A cell handover method, applied to an on-board terminal, comprising:
after determining that it is necessary to transmit a V2X message via a wireless network, determining whether the on-board terminal is currently in a Radio Access Network RAN cell handover process;
when it is determined that the on-board terminal is in a Radio Access Network RAN cell handover process, pausing the RAN cell handover, and transmitting the V2X service message via a wireless network; and
after transmitting the V2X service message, resuming or continuing the RAN cell handover.

10. The cell handover method according to claim 9, wherein transmitting the V2X service message via a wireless network comprises:
transmitting the V2X service message via a current wireless channel.

11. The cell handover method according to claim 9, wherein
the V2X service message is transmitted to an integrated communication, sensing, and computing unit by the on-board terminal via a wireless network.

12. The cell handover method according to claim 9, wherein:
the V2X service message is transmitted to a V2X server by the on-board terminal via a wireless network.

13. An electronic device, comprising:
a processor; and
a memory for storing instructions executable by the processor;
wherein the processor is configured to execute the instructions, so as to implement the method according to any one of claims 1 to 12.

14. A computer-readable storage medium, wherein instructions in the storage medium, when executed by a processor of an electronic device, cause the electronic device to perform the method according to any one of claims 1 to 12.
